Europäisches Patentamt

European Patent Office

Office européen des brevets

(11) Veröffentlichungsnummer: **0 220 164**
A2

(12) # EUROPÄISCHE PATENTANMELDUNG

(21) Anmeldenummer: 86890253.7

(22) Anmeldetag: 09.09.86

(51) Int. Cl.⁴: **F 16 N 29/04**

(30) Priorität: 09.09.85 AT 2625/85

(43) Veröffentlichungstag der Anmeldung:
29.04.87 Patentblatt 87/18

(84) Benannte Vertragsstaaten:
BE DE FR GB IT

(71) Anmelder: VOEST-ALPINE Aktiengesellschaft
Muldenstrasse 5
A-4020 Linz(AT)

(72) Erfinder: Schellenberg, Eduard, Dipl.-Ing.
Liebermannweg 32
A-4020 Linz(AT)

(72) Erfinder: Steinbrucker, Gerhard, Dipl.-Ing.
Bessemerstrasse 30
A-8740 Zeltweg(AT)

(74) Vertreter: Matschnig, Franz, Dipl.-Ing.
Siebensterngasse 54 Postfach 452
A-1071 Wien(AT)

(54) Verfahren zur Überwachung eines ein strömendes Medium enthaltenden Systems, beispielsweise eines Schmierungssystems und Schaltungsanordnung zur Durchführung des Verfahrens.

(57) Bei diesem Verfahren zur Überwachung eines ein strömendes Medium enthaltenden Systems, beispielsweise eines Schmierungssystems für ein Getriebe, für Lager od. dgl. wird Öl mittels einer Pumpe aus einem Vorratsbehälter, Sumpf od. dgl. gegebenenfalls über Kühler, Filter etc. den zu schmierenden Teilen zugeführt.

Um die ordnungsgemäßen Druck- bzw. Durchfluß- verhältnisse bzw. bei einem Schmierungssystem den durchschnittlichen Schmierzustand auf einfache Weise erfassen zu können, ist vorgesehen, daß der Druck und/oder die Durchflußmenge des Mediums gemessen und die Meßwerte mit vorgegebenen Mindestwerten verglichen werden und ein Alarm- bzw. Abschaltsignal abgegeben wird, soferne die Anzahl oder die Dauer der positiven Messungen innerhalb eines bestimmten Meßintervalles unter eines vor- gegebenen Mindestanzahl bzw. Mindestdauer liegt. Vor- zugsweise erfolgen die Messungen periodisch und die Meßintervalle folgen periodisch aufeinander.

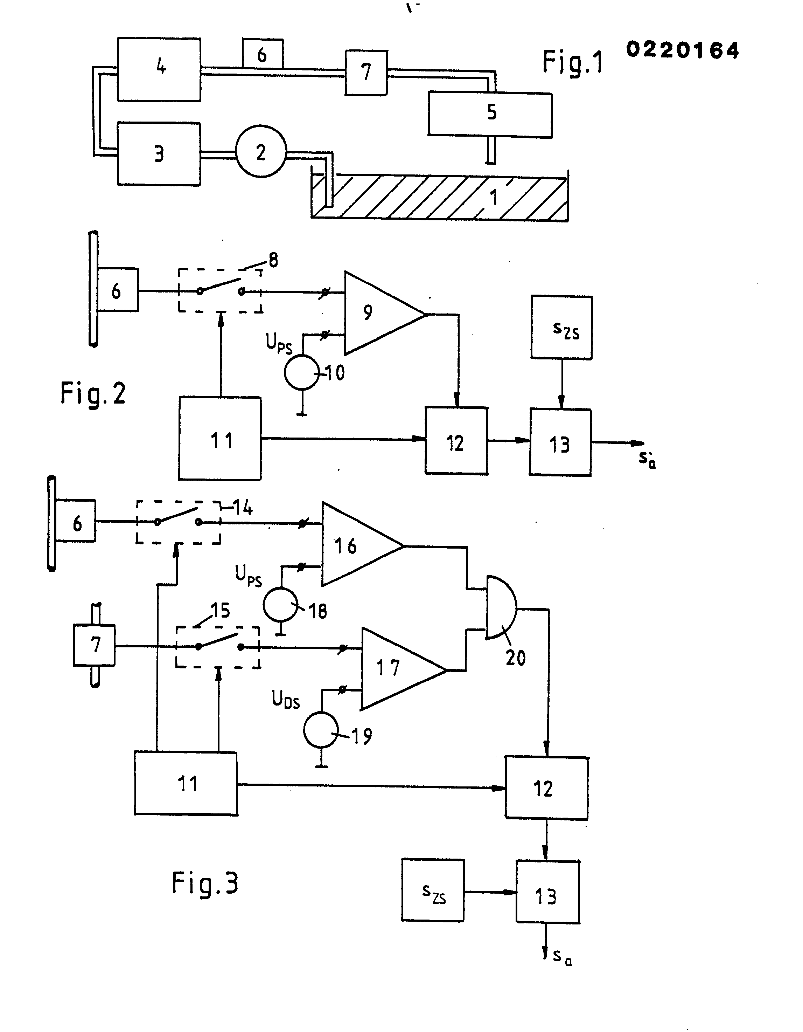

Eine mögliche Schaltungsanordnung zur Durchführung des Verfahrens zeichnet sich dadurch aus, daß die Ausgänge eines Druck- und/oder Durchflußsensor (6, 7) über einen periodisch betätigbaren Schalter (8, 14, 15) mit einem Eingang je eines Komparators (9, 16, 17) verbunden sind, dessem anderen Eingang eine Druck- bzw. Durchfluß-Sollwert- Spannung $(U_{PS}, U_{DS})$ zugeführt ist und daß der Ausgang des Komparators (9) bzw. die Ausgänge der Komparatoren (16, 17) mit dem Eingang eines Zählers (12) verbunden ist, dessen Zählerstand periodisch abrufbar und rücksetzbar ist und daß zum Vergleich des periodisch abgerufenen Zählerstandes mit einem Zählerstand-Sollwert $(S_Z)$ eine Vergleichsschaltung (13) vorgesehen ist, an deren Ausgang das Alarm - bzw. Abschaltsignal $(s_a)$ auftritt (Figur 2).

Fig.2

Die Erfindung bezieht sich auf ein Verfahren zur Überwachung eines ein strömendes Medium enthaltenden Systems, beispielsweise eines Schmierungssystems, für ein Getriebe, für Lager od. dgl., bei welchem Öl mittels einer Pumpe aus einem Vorratsbehälter, Sumpf od. dgl., gegebenenfalls über Kühler, Filter etc. den zu schmierenden Teilen zugeführt wird sowie auf eine Schaltungsanordnung zur Durchführung des Verfahrens.

Bei ölgeschmierten Systemen ist eine quasi-kontinuierliche Ölversorgung der zu schmierenden Stellen, wie z.B. der Lager und Zahnräder eines Getriebes, von wesentlicher Bedeutung. Bei vielen, vor allem nicht stationär arbeitenden Maschinen, nimmt der Ölvorratsbehälter oft Schräglagen ein, die dazu führen, daß das Ölansaugrohr außerhalb des Ölspiegels gerät, wodurch vorübergehend die Ölversorgung unterbrochen wird. Dies ist z.B. im Bergbau bei Schrämmaschinen der Fall, wo der Schrämkopf und damit das Schrämgetriebe verschiedene Lagen, z.B. 50° aufwärts oder abwärts einnimmt und die Gefahr besteht, daß das Schrämgetriebe nicht genügend mit Öl versorgt und dadurch beschädigt wird.

Es ist im Maschinenbau bekannt, bei Schmierungssystemen den Öldruck und/oder die Öldurchflußmenge zu messen. Oft werden hiebei Schalter verwendet, die z.B. bei Absinken des Öldruckes unter einem bestimmten Mindestwert betätigt werden und eine Anzeige, einen Alarm oder eine Notabschaltung auslösen. Bei vielen Arbeitsmaschinen ist jedoch eine vorübergehende Unterbrechung des Ölflusses nicht zu vermeiden und auch ohne Bedeutung, es sei denn, derartige Unterbrechungen treten zu häufig und zu lange auf.

Ähnliche Probleme treten nicht nur bei Schmierungssystemen auf, sondern auch bei anderen Systemen, die ein strömendes Medium enthalten. Hier seien z.B. erwähnt: Systeme, die bei Werkzeugmaschinen Schmier- und/oder Kühlemulsionen zu den Werkstücken fördern sollen, Sprüh- und Sprinkleranlagen für Wasser, Kühlsysteme die ein Kühlgas, allenfalls teilweise verflüssigt, enthalten, Druckluftanlagen, Systeme die medizinische Gase, z.B. Narkosegase, enthalten und fördern.

Bei solchen Systemen ist eine besondere Überwachung des durchschnittlichen Druckes bzw. der Durchflußmenge des Mediums wünschenswert.

Ziel der Erfindung ist die Auffindung eines Verfahrens, das eine solche Überwachung ermöglicht, im besonderen die Erfassung des durchschnittlichen Schmierzustandes eines Schmierungssystems erlaubt und auf die oben dargestellte Problematik Bedacht nimmt.

Dieses Ziel läßt sich mit einem Verfahren der eingangs erwähnten Art erreichen, bei welchem erfindungsgemäß der Druck und/oder die Durchflußmenge des Mediums gemessen und die Meßwerte mit vorgegebenen Mindestwerten verglichen werden und ein Alarm- bzw. Abschaltsignal abgegeben wird, soferne die Anzahl oder die Dauer der positiven Messungen innerhalb eines bestimmten Meßintervalles unter einer vorgegebenen Mindestanzahl bzw. Mindestdauer liegt.

Dieses Verfahren toleriert zwar vorübergehende Abfälle des Druckes bzw. der Durchflußmenge bzw. Schmiermittelausfälle, stellt jedoch sicher, daß ein Alarm- oder Abschaltsignal abgegeben wird, soferne ein vorgebbarer Mittelwert z.B. des Schmierungszustandes unterschritten wird. Durch Wahl der die Meßzeitpunkte bestimmenden Frequenz und der Länge der Meßintervalle läßt sich das Verfahren an die jeweiligen Erfordernisse anpassen.

Hiebei ist es vorteilhaft, wenn der Druck und/oder die Durchflußmenge periodisch gemessen werden.

Auch kann es empfehlenswert sein, wenn die Meßintervalle periodisch aufeinander folgen.

Eine zweckmäßige Schaltungsanordnung zur Durchführung des erfindungsgemäßen Verfahrens zeichnet sich dadurch aus, daß die Ausgänge eines Druck- und/oder Durchflußsensors über einen periodisch betätigbaren Schalter mit einem Eingang je eines Komparators verbunden sind, dessem anderen Eingang eine Druck- bzw. Durchfluß-Sollwert- Spannung zugeführt ist und daß der Ausgang des Komparators bzw. die Ausgänge der Komparatoren mit dem Eingang eines Zählers verbunden ist, dessen Zählerstand periodisch abrufbar und rücksetzbar ist und daß zum Vergleich des periodisch abgerufenen Zählerstandes mit einem Zählerstand- Sollwert eine Vergleichsschaltung vorgesehen ist, an deren Ausgang das Alarm- bzw. Abschaltsignal auftritt. Diese Schaltungsanordnung erfordert nur geringen Aufwand und läßt wegen ihrer Flexibilität in der Wahl der Auslösekriterien den Einsatz bei allen denkbaren Schmierungssystemen zu.

Eine vorteilhafte Weiterbildung der genannten Schaltungsanordnung zeichnet sich dadurch aus, daß die dem Druck- und Durchflußsensor zugeordneten Schalter wechselweise periodisch betätigbar sind. Hiedurch ergibt sich eine ineinander geschachtelte Folge der Druck- und Durchflußsignale, die somit gemeinsam ausgewertet werden können.

Bei einer weiteren Schaltungsanordnung zur Durchführung des Verfahrens nach der Erfindung ist vorgesehen, daß Meßsignale eines Drucksensors und/oder eines Durchflußsensors über einen Vorwiderstand einem Parallel-RC-Glied zugeführt sind und die Spannung an dem Kondensator einem Eingang eines Komparators zugeführt ist, an dessem anderen Eingang eine Sollwert-Spannung liegt. Diese quasi-analoge Schaltungsanordnung zeichnet sich durch geringen Aufwand aus, da kein Zähler erforderlich ist.

Hiebei ist es zweckmäßig, wenn zur Ermittlung der Meßsignale der Ausgang des Drucksensors bzw. des Durchflußsensors über einen periodisch betätigbaren Schalter mit einem Eingang eines Komparators verbunden ist, an dessem anderen Eingang eine Sollwert-Spannung liegt.

Bei einer anderen Schaltungsanordnung zur Durchführung des Verfahrens ist erfindungsgemäß vorgesehen, daß ein Druckschalter und/oder ein Durchflußschalter vorgesehen sind, die je einen Arbeits- und einen Ruhekontakt aufweisen, der Anschluß des Arbeitskontaktes an eine Gleichspannung geschaltet und der Anschluß des Ruhekontaktes an Masse geschaltet ist und das Umschalt-Kontaktstück über die Serienschaltung eines Wider-

standes mit einem Kondensator gegen Masse geschaltet ist und daß die Spannung am Kondensator einem Eingang eines Komparators zugeführt ist, an dessem anderen Eingang eine Sollwertspannung liegt. Diese Variante erfordert einen besonders geringen Schaltungsaufwand und ermöglicht zudem die Verwendung einfacher Schalter als Druck- bzw. Durchflußsensoren.

Will man sowohl den Druck als auch die Durchflußmenge des Mediums als die Abgabe eines Alarm- oder Abschaltsignales bestimmende Kriterien heranziehen, so ist es zweckmäßig, wenn dem Drucksensor bzw. -schalter und dem Durchflußsensor bzw. -schalter je ein Komparator zugeordnet ist und die Ausgänge der Komparatoren mit den Eingängen eines Gatters verbunden sind, an dessem Ausgang das Alarm- bzw. Abschaltsignal auftritt.

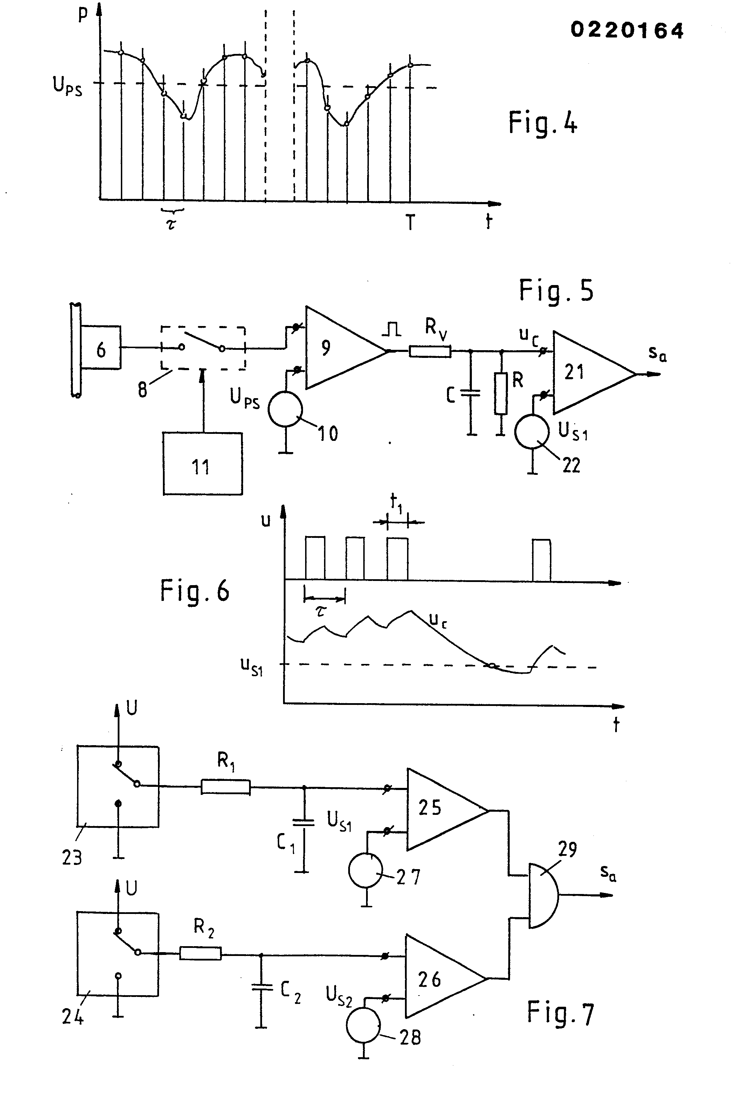

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1 schematisch einen Schmiermittelkreislauf, Fig. 2 eine erste Schaltungsanordnung nach der Erfindung, Fig. 3 eine Modifikation der Schaltungsanordnung nach Fig. 2 mit Messung und Auswertung sowohl des Öldruckes als auch der Öldurchflußmenge, Fig. 4 in einem Diagramm das Meßprinzip zu den Schaltungsanordnungen nach Fig. 2 und 3, Fig. 5 eine weitere Schaltungsanordnung nach der Erfindung, ohne Verwendung eines Zählers, Fig. 6 in einem Diagramm das Meßprinzip zu der Schaltungsanordnung nach Fig. 5 und Fig. 7 eine Variante einer Schaltungsanordnung nach der Erfindung, bei welcher Druck- und Durchflußschalter eingesetzt werden.

Gemäß Fig. 1 weist ein Schmierungssystem einen Ölvorratsbehälter 1 auf, aus dem mittels einer Pumpe 2 Öl über einen Ölkühler 3 und ein Ölfilter 4 den zu schmierenden Teilen 5, z.B. einem Getriebe, zugeführt wird. An geeigneter Stelle ist in dem geschlossenen Ölkreislauf ein Drucksensor 6 und ein Durchflußsensor 7 angeordnet. Wie aus dem Nachstehenden hervorgeht, kann jedoch auch nur einer der beiden Sensoren vorgesehen sein. Wenn im Zusammenhang mit der Erfindung von Öl gesprochen wird, so kann dieser Begriff jede Art von Schmiermittel umfassen und soll nicht auf "Öl" beschränkt sein. Es könnte sich auch z.B. um Emulsionen zur Schmierung und Kühlung bei spanabhebenden Werkzeugen handeln.

Die Schaltungsanordnung nach Fig. 2 zeigt den Drucksensor 6, der ein dem Öldruck proportionales Ausgangssignal liefert. In dem Diagramm nach Fig. 4 ist der beispielsweise Verlauf des Öldruckes p in Abhängigkeit von der Zeit t aufgetragen. Der Ausgang des Drucksensors 6 ist über einen gesteuerten, vorzugsweise elektronischen Schalter 8 einem Eingang eines Komparators 9 zugeführt. Der andere Eingang des Komparators 9 ist mit einer Sollwert-Spannungsquelle 10 verbunden, die eine Gleichspannung $U_{ps}$ liefert. In Fig. 4 ist dieser Spannungspegel strichliert eingezeichnet.

Ein Taktgeber 11 schließt den Schalter 8 in Abständen $\tau$ kurzzeitig und periodisch. Dementsprechend treten am Ausgang des Komparators 9 immer dann Impulse auf, wenn das Ausgangssignal des Drucksensors 6 unter dem Soll-Spannungswert $U_{ps}$ liegt. Diese Impulse werden von einem Zähler 12 erfaßt, der dem Komparator 9 nachgeschaltet ist. Der Zähler 12 zählt über ein Meßintervall T alle eingelangten Impulse und wird am Ende dieses Intervalls durch einen Impuls des Taktgebers 11 abgefragt, sodaß am Ausgang des Zählers 12 die Gesamtzahl der innerhalb der Zeit T gezählten Impulse auftritt. Gleichzeitig wird der Zähler 12 wieder rückgesetzt, sodaß die Impulse der nächsten Meßperiode aufsummiert werden können.

In der Praxis kann z.B. die Abtastzeit $\tau$ mit 100 ms und die Meßperiode T mit 10 s angesetzt werden, sodaß innerhalb einer Meßperiode 100 Messungen durchgeführt werden. Bei einer bestimmten Maschine, die an das Schmierungssystem angeschlossen ist, kann beispielsweise toleriert werden, daß bei 20 Messungen der 100 Messungen der Öldruck unterhalb des Sollwertes liegt. Wird diese Anzahl innerhalb eines Meßintervalles T überschritten, soll ein Alarm- oder ein Abschaltsignal abgegeben werden.

Zu diesem Zweck ist dem Zähler 12 eine Vergleichsschaltung 13 nachgeordnet, der auch ein Zählerstand-Sollwertsignal $s_{zs}$ zugeführt ist. In der Vergleichsschaltung 13 wird der abgefragte Zählerstand mit dem Sollwert, beispielsweise der Zahl 20, verglichen. Liegt der Zählerstand oberhalb dieses Sollwertes, so tritt am Ausgang der Vergleichsschaltung ein Signal $s_a$ auf, das zu einer Anzeige führt und/oder einen Alarm auslöst und/oder automatisch die zu schmierende Maschine abschaltet.

Da der Öldruck alleine nicht in allen Fällen das maßgebliche Kriterium für eine ordnungsgemäße Schmierung ist, kann in gleicher Weise ständig die Durchflußmenge des Öls überwacht werden. Auch können sowohl der Öldruck als auch der Öldurchfluß mittels Schaltungen nach Fig. 2 überwacht werden und die entsprechenden Ausgangssignale in einem Gatter verknüpft werden, sodaß immer dann ein Alarmsignal auftritt, wenn innerhalb eines Meßintervalles eine bestimmte Anzahl "negativer" Messungen des Öldruckes oder der Öldurchflußmenge auftreten.

Die gleichzeitige Überwachung von Druck und Durchflußmenge kann z.B. in einer Schaltung nach Fig. 3 durchgeführt werden. Hier sind die Ausgangssignale eines Drucksensors 6 und eines Durchflußsensors 7 über zwei gesteuerte Schalter 14, 15 je dem ersten Eingang zweier Komparatoren 16, 17 zugeführt. An den zweiten Eingängen liegt je eine Sollwert-Spannungsquelle 18, 19 mit Sollwert-Spannungen $U_{ps}$ und $U_{DS}$, die den Mininalwerten des Druckes bzw. der Durchflußmenge entsprechen.

Der Taktgeber 11 steuert die Schalter 14, 15 periodisch, jedoch wechselweise, sodaß die abgetasteten Werte der Ausgangssignale der Sensoren 6 und 7 zeitlich ineinander verschachtelt sind. Die Ausgänge der Komparatoren sind mit den Eingängen eines Gatters 20 verbunden, dessen Ausgang dem Eingang des Zählers 12 zugeführt ist. Die weitere Auswertung der Signale erfolgt wie im Zusammenhang mit Fig. 2 beschrieben.

Es versteht sich, daß durch Wahl der Sollwert-Spannungen $U_{ps}$, $U_{DS}$, der Abtastintervalle $\tau$, des Meßintervalles T und des Zählerstandsollwertes $s_{zs}$ eine Anpassung an die jeweiligen Betriebserfordernisse des Schmierungssystems im weitesten Rahmen möglich ist.

Die Schaltung nach Fig. 5 zeigt eine Modifikation, die ohne Zähler arbeitet. Auch hier ist der Ausgang eines Drucksensors 6 (oder eines Durchflußsensors) über einen von einem Taktgeber 11 gesteuerten Schalter 8 einem Eingang eines Komparators 9 zugeführt, dessen anderer Eingang mit einer Druck-Sollwert-Spannungsquelle 10 (Spannung $U_{ps}$) verbunden ist.

Am Ausgang treten im Abstand $\tau$ Impulse auf, soferne der Druck oberhalb des vorgegebenen Pegels ($U_{ps}$) liegt. Die Länge $t_1$ dieser Impulse ist durch die Schließzeit des Schalters 8 bestimmt und muß während der Messung konstant bleiben. In dem Diagramm nach Fig. 6 sind diese Impulse gezeigt, wobei wegen eines Druckabfalles nach den ersten drei Impulsen drei Impulse ausfallen.

Der Ausgang des Komparators 9 ist über einen Widerstand $R_v$ einem Parallel-RC-Glied R, C zugeführt. Soferne wegen genügend hohen Drucks die Impulse regelmäßig auftreten, wird ein stationärer Zustand erreicht, der durch eine im Mittel konstante, sägezahnartige Spannung am Kondensator C charakterisiert ist. Der Anstieg des Sägezahns ist hiebei, außer durch die Spannung der Impulse, durch die Zeitkonstante $R_v \cdot C$, der Abfall durch die Zeitkonstante $R \cdot C$ bestimmt. Bei Ausfall von Impulsen sinkt die Spannung jedoch ab um bei Auftreten neuer Impulse wieder anzusteigen. Vergleicht man daher die Spannung am Kondensator C mit einer vorgegebenen Sollspannung $U_{S1}$, so kann eine Häufung "negativer" Druckmessungen ebenso festgestellt werden, wie bei den Schaltungen nach Fig. 2 und 3. Hiezu ist ein Komparator 21 vorgesehen, an dessem einen Eingang die Spannung am RC-Glied R, C liegt und dessen anderer Eingang mit einer Soll-Spannungsquelle 22 (Spannung $U_{S1}$) verbunden ist. Bei Abfall der Spannung $U_c$ am Kondensator C unter die Sollspannung $U_{S1}$ tritt am Ausgang des Komparators 21 ein Alarm- bzw. Abschaltsignal $s_a$ auf. Auch hier ist eine Anpassung an die jeweiligen Erfordernisse durch Wahl der Abtastintervalle $\tau$, der Impulslänge $t_1$, der Druck-Sollwert-Spannung $U_{PS}$ und der Sollspannung $U_{S1}$ möglich.

Bei der Schaltung nach Fig. 7 erfolgt die Auswertung gleichfalls ohne Zähler, doch sind hier die Druck- bzw. Durchflußsensoren als z.B. federbelastete Druckschalter 23 bzw. Durchflußschalter 24 ausgebildet. Die Schalter sind je mit einem Ruhe- und einem Arbeitskontakt ausgestattet, wobei oberhalb eines bestimmten Öldruckes bzw. oberhalb einer bestimmten Öldurchflußmenge der Arbeitskontakt, sonst der Ruhekontakt geschlossen sind.

Die Anschlüsse der Arbeitskontakte liegen an einer Gleichspannung U, die Anschlüsse der Ruhekontakte sind gegen Masse geschaltet. Das Umschalt-Kontaktstück ist jeweils über einen Widerstand $R_1$ bzw. $R_2$ an einen Kondensator $C_1$ bzw. $C_2$ geführt und der spannungsführende Anschluß der Kondensatoren $C_1$, $C_2$ ist je mit dem ersten Eingang eines Komparators 25, 26 verbunden. Die zweiten Eingänge der Komparatoren 25, 26 sind mit Soll-Spannungsquellen 27, 28 (Spannung $U_{S1}$ bzw. $U_{S2}$) verbunden. Die Ausgänge der Komparatoren 25, 26 liegen an den beiden Eingängen eines Gatters 29, an dessen Ausgang das Alarm- bzw. Abschaltsignal $s_a$ auftreten kann.

Solange der Druck oberhalb des Umschaltwertes des Schalters 23 liegt, wird die Spannung am Kondensator $C_1$ über den Widerstand $R_1$ auf dem Wert U gehalten. Bei Druckabfall schaltet der Schalter 23 um und die Spannung am Kondensator $C_1$ sinkt entsprechend der Zeitkonstanten $R_1C_1$ exponentiell ab, da sich der Kondensator $C_1$ über den Widerstand $R_1$ und den Ruhekontakt des Schalters 23 gegen Masse entlädt. Sobald die Kondensatorspannung $U_c$ unter die Spannung $U_{S1}$ fällt, gibt der Komparator 21 ein Signal an das (ODER)-Gatter 29, an dessen Ausgang das Alarm- bzw. Abschaltsignal $s_a$ auftritt.

Sinngemäß das gleiche gilt für die dem Durchflußschalter 24 nachgeordnete Schaltung. Somit wird immer dann das Signal $s_a$ auftreten, wenn der Druck- und/oder die Durchflußmenge über längere Zeit unter den Wert absinken, bei welchem die Schalter 23 bzw. 24 umschalten. Maßgebliche Kriterien für die Abgabe des Signales $s_a$ sind hier einerseits die z.B. durch Federspannung festlegbaren Umschaltpunkte der Schalter 23 und 24 und andererseits die Zeitkonstanten $R_1C_1$, $R_2C_2$, die Spannung U und die Soll-Spannungen $U_{S1}$ bzw. $U_{S2}$. Somit kann auch diese Schaltung an alle Erfordernisse angepaßt werden. Bei den Schaltungen nach Fig. 5 und 7 kann es unter Umständen zweckmäßig sein, beim Einschalten der Maschine über eine Verzögerungsschaltung vorübergehend eine oberhalb des Schaltpegels $U_{S1}$ bzw. $U_{S2}$ liegende Spannung an den Kondensator C, $C_1$, $C_2$ zu legen, da der Aufbau des Öldruckes und der Öldurchflußmenge eine gewisse Zeit benötigt und während dieser Zeit jedenfalls keine Abschaltung erfolgen soll.

Das erfindungsgemäße Verfahren und die daraus abgeleiteten, hier nur an Beispielen beschriebenen Schaltungsanordnungen ermöglichen die zuverlässige Kontrolle eines
Schmierungssystems, wobei wesentlich mehr Parameter als
bloß das Vorhandensein eines bestimmten Öldruckes als
Entscheidungskriterien herangezogen werden können. Wie
bereits eingangs erwähnt, beschränkt sich der Einsatz
der Erfindung nicht auf Schmierungssysteme, sondern er
kann sich auf viele Systeme erstrecken, die ein strömendes
Medium enthalten und bei denen eine Versorgung eines
bestimmten Bereiches mit einer genügenden Menge dieses
Mediums sichergestellt sein soll.

Patentansprüche
----------------------------------

1. Verfahren zur Überwachung eines ein strömendes Medium enthaltenden Systems, beispielsweise eines Schmierungssystems für ein Getriebe, für Lager od. dgl., bei welchem Öl mittels einer Pumpe aus einem Vorratsbehälter, Sumpf od. dgl., gegebenenfalls über Kühler, Filter etc. den zu schmierenden Teilen zugeführt wird, dadurch gekennzeichnet, daß der Druck und/oder die Durchflußmenge des Mediums gemessen und die Meßwerte mit vorgegebenen Mindestwerten verglichen werden und ein Alarm- bzw. Abschaltsignal abgegeben wird, soferne die Anzahl oder die Dauer der positiven Messungen innerhalb eines bestimmten Meßintervalles unter einer vorgegebenen Mindestanzahl bzw. Mindestdauer liegt.

2. Verfahren nach Anspruch 1, dadurch gekennzeichnet, daß der Druck und/oder die Durchflußmenge des Mediums periodisch gemessen werden.

3. Verfahren nach Anspruch 1 oder 2, dadurch gekennzeichnet, daß die Meßintervalle periodisch aufeinander folgen.

4. Schaltungsanordnung zur Durchführung des Verfahrens nach Anspruch 1 und 2 oder 3, dadurch gekennzeichnet, daß die Ausgänge eines Druck- und/oder Durchflußsensors (6, 7) über einen periodisch betätigbaren Schalter (8, 14, 15) mit einem Eingang je eines Komparators (9, 16, 17) verbunden sind, dessen anderen Eingang eine Druck- bzw. Durchflußsollwert-Spannung ($U_{PS}$, $U_{DS}$) zugeführt ist und daß der Ausgang des Komparators (9) bzw. die Ausgänge der Komparatoren (16, 17) mit dem Eingang eines Zählers (12) verbunden ist, dessen Zählerstand periodisch abrufbar und rücksetzbar ist und daß zum Vergleich des periodisch abgerufenen Zählerstandes mit einem Zählerstand-Sollwert ($S_Z$) eine Vergleichsschaltung (13) vorgesehen ist, an deren Ausgang das Alarm- bzw. Abschaltsignal ($s_a$) auftritt (Fig. 2, 3).

5. Schaltungsanordnung nach Anspruch 4, dadurch gekennzeichnet, daß die dem Druck- und Durchflußsensor (6, 7) zugeordneten Schalter (14, 15) wechselweise periodisch betätigbar sind (Fig. 3).

6. Schaltungsanordnung zur Durchführung des Verfahrens nach Anspruch 1 oder 2, dadurch gekennzeichnet, daß Meßsignale eines Drucksensors (6) und/oder eines Durchflußsensors über einen Vorwiderstand ($R_V$) einem Parallel-RC-Glied (R, C) zugeführt sind und die Spannung ($U_C$) an dem Kondensator (C) einem Eingang eines Komparators (21) zugeführt ist, an dessen anderen Eingang eine Sollwert-Spannung ($U_{S1}$) liegt (Fig. 5).

7. Schaltungsanordnung nach Anspruch 6, dadurch gekennzeichnet, daß zur Ermittlung der Meßsignale der Ausgang des Drucksensors (6) bzw. des Durchflußsensors über einen periodisch betätigbaren Schalter (8) mit einem Eingang eines Komparators (9) verbunden ist, an dessen anderen Eingang eine Sollwert-Spannung ($U_{PS}$) liegt (Fig. 5).

8. Schaltungsanordnung zur Durchführung des Verfahrens nach Anspruch 1, dadurch gekennzeichnet, daß ein Druckschalter (23) und/oder ein Durchflußschalter (24) vorgesehen sind, die je einen Arbeits- und einen Ruhekontakt aufweisen, der Anschluß des Arbeitskontaktes an eine Gleichspannung (U) geschaltet und der Anschluß des Ruhekontaktes an Masse geschaltet ist und das Umschalt-Kontaktstück über die Serienschaltung eines

Widerstandes ($R_1$, $R_2$) mit einem Kondensator ($C_1$, $C_2$) gegen Masse geschaltet ist und daß die Spannung am Kondensator einem Eingang eines Komparators (25, 26) zugeführt ist, an dessem anderen Eingang eine Sollwertspannung ($U_{S1}$, $U_{S2}$) liegt (Fig. 7).

9. Schaltungsanordnung nach einem der Ansprüche 6 bis 8, dadurch gekennzeichnet, daß dem Drucksensor bzw. -schalter (6, 23) und dem Durchflußsensor bzw. -schalter (7, 24) je ein Komparator (16, 17; 25, 26) zugeordnet ist und die Ausgänge der Komparatoren (16, 17; 25, 26) mit den Eingängen eines Gatters (20, 27) verbunden sind, an dessem Ausgang das Alarm- bzw. Abschaltsignal ($s_a$) auftritt (Fig. 3 und 7).

Fig.1  0220164

Fig.2

Fig.3

0220164

Fig. 4

Fig. 5

Fig. 6

Fig. 7